# EUROPEAN PATENT APPLICATION

(11) **EP 0 680 046 A2**
(43) Date of publication of application: **02.11.1995**
(21) Application number: 95106256.1
(22) Date of filing: 26.04.1995
(51) Int. Cl.: G11B 27/029, G11B 27/036, G11B 27/32

(54) **Information storage device**

(30) Priority: 27.04.1994 JP 89950/94; 28.02.1995 JP 40540/95
(71) Applicant: CANON KABUSHIKI KAISHA, Tokyo (JP)
(72) Inventor: Kubo, Ryoji, c/o Canon K.K., Ohta-ku, Tokyo (JP)
(74) Representative: Pellmann, Hans-Bernd, Dipl.-Ing.

(57) **Abstract**

An information storage device includes a storage circuit for storing information on a recording medium, an instruction circuit arranged to give an instruction as to permission or non-permission of erasure of information stored on the recording medium and a storage action control circuit arranged to control the storage circuit in such a way as to cause the storage circuit to store new information in a storage area other than a storage area in which information is already stored among storage areas provided on the recording medium when non-permission of erasure of information stored on the recording medium is instructed by the instruction circuit.

## Description

### Background of the Invention:

### Field of the Invention:

This invention relates to an information storage device and more particularly to an information storage device advantageous arranged to prevent erroneous erasure of information already in storage.

### Description of the Related Art:

Information storage (recording) devices have heretofore been arranged to prevent erroneous erasure by one of the following two methods:

In one method, a magnetic tape such as a video cassette tape or an audio cassette tape, or a floppy disk such as a 3.5 inch disk or 5.25 inch disk, is provided with a lug or a sliding member which is arranged on a case, a cassette, a jacket or the like to provide a protection against writing. The device is arranged to detect the state of this member and to inhibit writing according to the state of this member.

In the other method, erasure inhibiting flags are attached to applicable files stored within a floppy disk or a hard disk and the device is inhibited from erasing the files having these flags.

According to the first method, when erasure is inhibited by bending the lug or by sliding the sliding member to inhibit erasure, it becomes impossible to newly record information even if the recording medium still has an unrecorded (unused) area in which information can be newly recorded without destroying any existing record of information. Therefore, the capacity of the recording medium sometimes cannot be fully used.

In the case of the second method, since each of files on the recording medium shows whether erasure is inhibited or not inhibited, the problem of the first method can be eliminated. According to the second method, however, only one bit or thereabout is normally allotted to the information indicating whether or not erasure is inhibited. Therefore, information already recorded might be erased by mistake if this bit is erroneously read.

### Summary of the Invention:

This invention is directed to the solution of the above-stated problems. It is, therefore, an object of this invention to provide an information storage device which is capable of reliably protecting information already stored on a recording medium while permitting effective use of the storage capacity of the medium.

The information storage device according to this invention comprises storage means for storing information on a recording medium, instruction means for instructing permission or non-permission of erasure of information stored on the recording medium, and storage action control means for controlling and causing a storing action of the storage means to store new information in a storage area other than a storage area in which information is already stored among storage areas on the recording medium when non-permission of erasure of information stored on the recording medium is instructed by the instruction means.

Another feature of this invention lies in that storage areas in which information is already stored are discriminated from other storage areas of the recording medium by using information stored in a specific area provided on the recording medium.

Another feature of this invention lies in that the specific area on the recording medium is a management area which is provided separately from a file area which is provided for storing actual information and that the management area includes a reserved area for management of files, a file allocation table having entries which correspond respectively to access units of the file area, and a root directory in which file names, file sizes, the leading entry values and dates of files, etc., are stored.

With the device arranged according to this invention as described above, when the instruction means indicates that no erasing action on information stored on the recording medium is permitted, new information is recorded in a storage area other than a storage area in which information is already stored. Therefore, the storage capacity of the recording medium can be effectively used while the information already stored on the recording medium is reliably protected.

A further feature of this invention lies in that the arrangement to detect, by using information stored in the specific area of the recording medium, the areas in which information has already been stored on the recording medium enables the device to accurately decide whether or not information is already stored in an area to be used for recording information. Therefore, the possibility of having a record of necessary information destroyed by any erroneous erasing action can be minimized.

Other objects and features of this invention will become apparent from the following detailed description of embodiments thereof taken in connection with the accompanying drawings.

### Brief Description of the Drawings:

Fig. 1 is a block diagram showing a functional arrangement of an information storage device which is arranged as a first embodiment of this invention.

Fig. 2 is a block diagram showing by way of example an arrangement made by applying this invention to an image pickup apparatus.

Figs. 3(a) to 3(f) are block diagrams showing in detail various manners in which a storage medium is arranged for use by the embodiment of this invention.

Fig. 4 shows data areas of a storage medium to be used by the embodiment of this invention.

Fig. 5 is a flow chart showing an image pickup operation of the embodiment of this invention.

Fig. 6 is a flow chart showing an erasing action on a storage medium of the embodiment of this invention.

Fig. 7 is a diagram showing an image pickup apparatus arranged as a second embodiment of this invention.

Fig. 8 is a diagram showing an image pickup apparatus arranged as a third embodiment of this invention.

### Detailed Description of the Preferred Embodiments:

The following describes by way of example some of preferred embodiments of this invention.

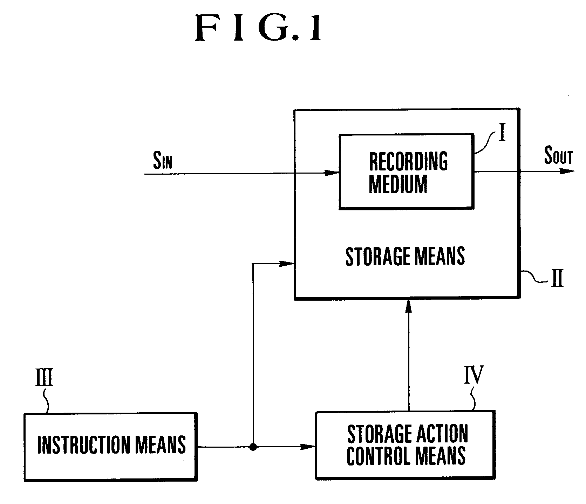

Fig. 1 shows in a block diagram a functional arrangement of an information storage device arranged as a first embodiment of this invention. As shown in Fig. 1, the information storage device is provided with a storage means II, an instruction means III and a storage action control means IV. The storage means II is provided for storing information on a recording medium I. The instruction means III is arranged to give an instruction for permitting or not permitting an erasing action on information stored on the recording medium I.

The storage action control means IV is provided for controlling the storage action of the storage means II in such a way as to cause it to store new information in a storage area other than a storage area in which information is already stored among the storage areas of the recording medium I, when an instruction is given by the instruction means III to permit no erasing action on information already in store on the recording medium I.

In the case of this embodiment, a management area is provided in a specific area on the recording medium I separately from a file area in which actual information is to be stored. The management area is arranged to include a reserved area, a file allocation table and a root directory. The reserved area is provided for management of files. The file allocation table (FAT) is arranged to have entries corresponding respectively to access units of the file area. Further, in the root directory, film names, file sizes, the leading entry values and dates of files, etc., are stored.

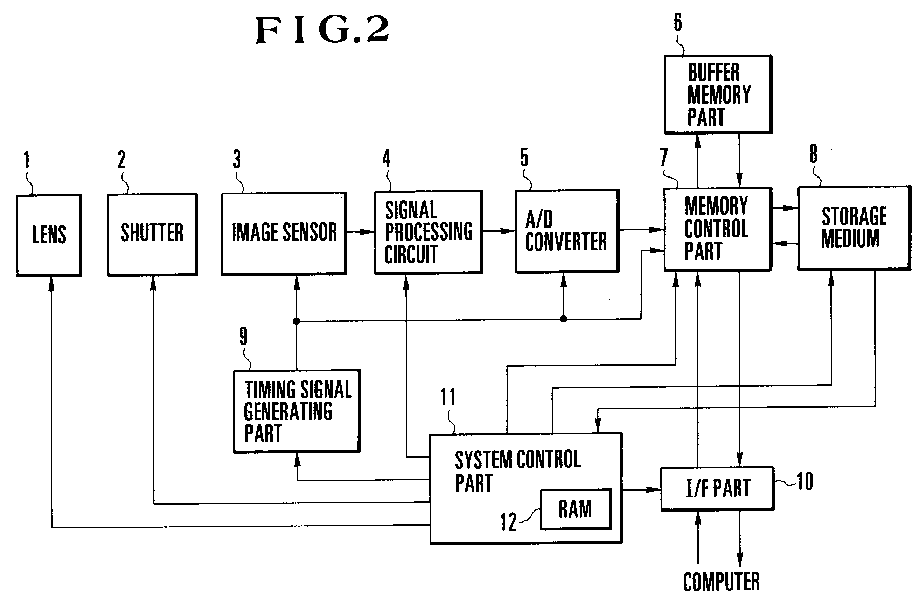

The details of the information storage device according to this invention are described by way of example below with reference to Figs. 2 to 8. Fig. 2 shows in a block diagram a case where this invention is applied to an image pickup apparatus.

Referring to Fig. 2, the image pickup apparatus includes a lens 1, a shutter 2, an image sensor 3 and a signal processing circuit 4, which is arranged to carry out various correcting processes, clamping, etc., on an image signal outputted from the image sensor 3.

An A/D converter 5 is arranged to analog-to-digital (A/D) convert an image signal outputted from the signal processing circuit 4. A buffer memory part 6 is arranged to temporarily store at least a one-picture amount of image data therein. A memory control part 7 is arranged to control transmission of image data and the buffer memory part 6. A detachably mountable storage medium 8, such as a hard disk or the like, is provided for storing or reading image data. A timing signal generating part 9 is arranged to output timing signals of varied kinds to supply them to the image sensor 3, the A/D converter 5 and the memory control part 7.

A digital I/F (interface) part 10 is provided for transmission of image data to an external device such as a computer or the like. Reference numeral 11 denotes a system control part. A RAM 12 is arranged within the system control part 11 to store data of varied kinds.

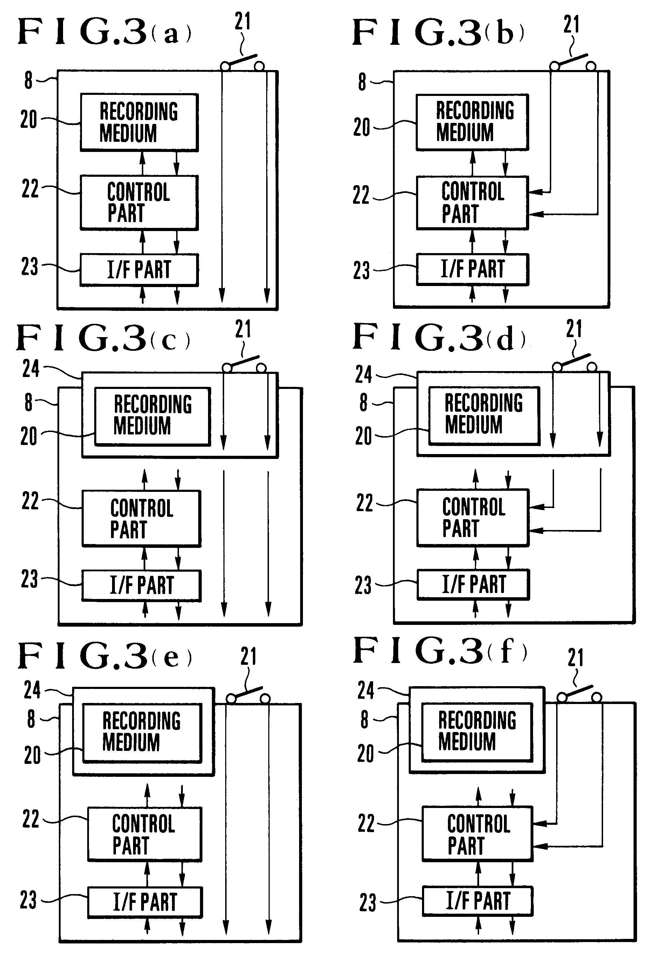

Referring to Figs. 3(a) to 3(f) which show in detail different manners in which the storage medium 8 is arranged, a rotary recording medium 20 includes a hard disk, a photo-magnetic disk or the like. A switch 21 is provided for setting a mode of permitting or not permitting erasure of data recorded on the rotary recording medium 20. Permission or non-permission of an erasing action on the recorded data is decided by the on-or off-state of the switch 21. A control part 22 is arranged to control the rotary recording medium 20 and the I/F part 23 and includes a head and a rotary driving system for access to the rotary recording medium 20. An I/F (interface) part 23 is provided for exchange of data with the outside.

Fig. 3(a) shows a case where information on the on-state or off-state of the erasure permission/non-permission switch 21 is arranged to be outputted as it is to the outside, and the control part 22 for controlling the rotary recording medium 20 is disposed within the storage medium 8.

Fig. 3(b) shows a case where the information on the state of the erasure permission/non-permission switch 21 is transmitted to the outside via the control part 22, and the control part 22 which controls the rotary recording medium 20 is within the storage medium 8.

Fig. 3(c) shows a case where a recording medium unit 24 which includes the rotary recording medium 20 and the erasure permission/non-permission switch 21 is detachably mountable on the storage medium 8, and the information on the state of the erasure permission/non-permission switch 21 is arranged to be outputted to the outside as it is.

Fig. 3(d) shows a case where the recording medium unit 24 which includes the rotary recording medium 20 and the erasure permission/non-permission switch 21 is detachably mountable, and the information on the state of the erasure permission/non-permission switch 21 is transmitted to the outside via the control part 22.

Fig. 3(e) shows a case where the recording medium unit 24 which includes the rotary recording medium 20 is detachably mountable, and the information on the state of the erasure permission/non-permission switch 21 is arranged to be outputted to the outside as it is.

Fig. 3(f) shows a case where the recording medium unit 24 including the rotary recording medium 20 is detachably mountable, and the information on the erasure permission/non-permission switch 21 is arranged to be transmitted to the outside through the control part 22.

In the case of each of Figs. 3(c) and 3(d), the signal of the erasure permission/non-permission switch 21 may be connected to the storage medium 8 and the recording medium unit 24 in any desired manner. Further, the same advantageous effects of the embodiment can be attained by arranging the storage medium 8 in any of the different manners shown in Figs. 3(a) to 3(f).

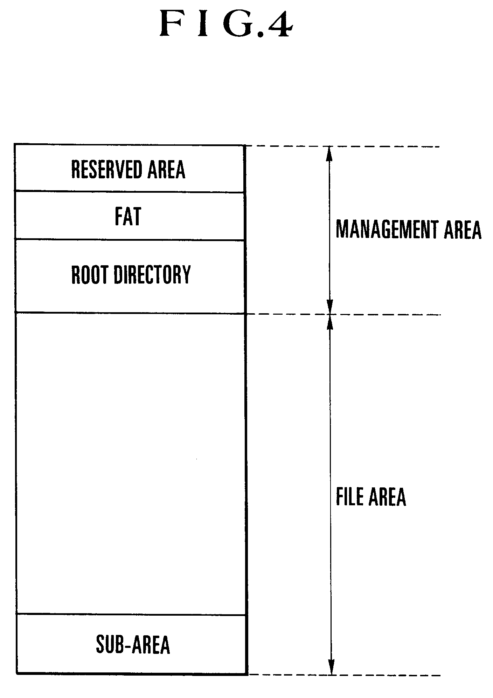

With the storage medium 8 arranged as described above, a manner in which a storing action on the storage medium 8 is performed is described with reference to Fig. 4 as follows: The storage medium 8 is divided into a management area and a file area. As shown in Fig. 4, the management area includes a reserved area which is provided for management of files, a file allocation table (FAT) and a root directory. The file area is arranged to have actual data of files stored therein.

Each access unit in the file area is called a cluster. Depending on its size, each file in the file area consists of one or a plurality of clusters. The file allocation table (FAT) has an entry corresponding to each cluster, and there are stored entry values corresponding to continuing clusters at applicable entries. In a case where there is no continuing cluster (an entry corresponding to the last cluster of the file), a value indicative of this is stored there.

In the root directory, there are stored file names, file sizes, the leading entry values and dates of the files.

The file allocation table (FAT) is often stored in a duplicated manner at a plurality of parts for the purpose of securing reliability, because information stored on the storage medium becomes hardly readable if the data of the file allocation table (FAT) becomes unreadable. Even where the file allocation table is not stored in this manner, some arrangement is made in general to ensure a high degree of reliability. Further, since such a storing method is well known, the details of it is omitted here.

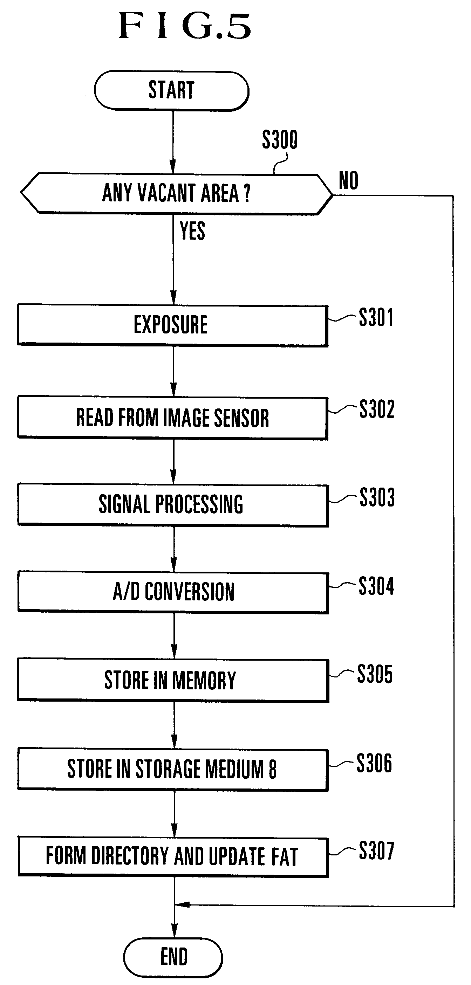

The image pickup operation of the embodiment is next described with reference to the flow chart of Fig. 5.

In the case of the information storage device of this embodiment, the system control part 11 causes an image pickup and recording operation to be carried out when an instruction is given to the system control part 11 for image pickup and recording by means of a switch or the like which is not shown or when an image pickup and recording command is inputted through the I/F part 10 from an external computer or the like which is not shown.

With the image pickup and recording operation started, the flow of operation comes to a step S300. At the step S300, a check is made for any vacant area where no information is stored on the storage medium 8 through the file allocation table (FAT). If no area is found to be vacant, the flow of operation comes to an end. If any area is found to be vacant, the flow comes to a step S301.

At the step S301, the shutter 2 is driven for an exposure. At a step S302, a reading action is performed on the image sensor 3. After completion of the reading, the flow comes to a step S303. At the step S303, an image signal read out by the step S302 is processed to have its color corrected and to be subjected to various signal processing actions. At a step S304, the processed signal is analog-to-digital converted by the A/D converter 5. A digital signal thus obtained is supplied via the memory control part 7 to the buffer memory part 6 to be temporarily stored there. The flow then proceeds to a step S306. At the step S306, image data stored at the buffer memory part 6 is read out via the memory control part 7 and stored in an area where no information is stored within the file area of the storage medium 8 as indicated by the file allocation table (FAT).

At a next step S307, a directory is formed and the file allocation table (FAT) of the management area is updated. In other words, the system control part 11 then detects, according to the values of the file allocation table (FAT), an area in which data is already stored within the file area. The image data temporarily stored at the buffer memory part 6 is transferred to and stored in an area other than the area in which data is already stored. At the same time, a value which indicates the linkage of a cluster of the newly stored image data is stored at an entry corresponding to the cluster.

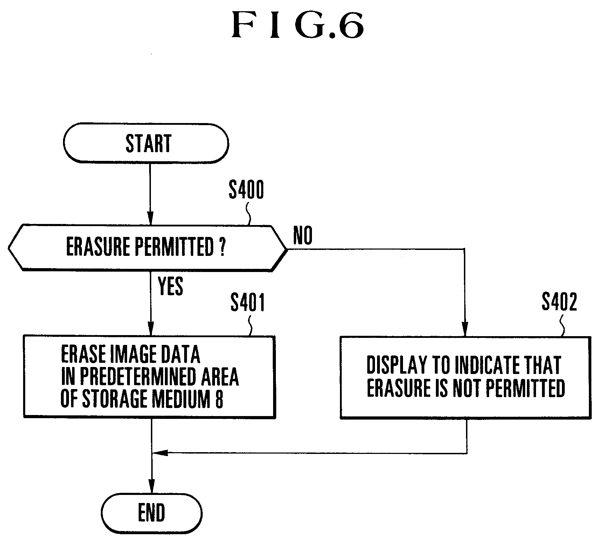

An erasing operation of the embodiment is next described with reference to the flow chart of Fig. 6.

After the start of the erasing operation, the flow comes to a step S400 to make a check to find if erasure is permitted. In other words, when a switch or the like which is not shown is operated to instruct the system control part 11 to erase some specific image data (single or a plurality of data, or all data existing in the file area within the storage medium) or when an instruction command for erasure is inputted via the I/F part 10 from an external computer or the like which is not shown, the system control part 11 makes a check for the state of the erasure permission/non-permission switch 21 to find if erasure has been permitted.

If so, the flow of operation comes to a next step S401. At the step S401, image data designated by the erasure instruction is erased. Specific data indicating execution of erasure is stored at an applicable entry of the directory area and the file allocation table area which correspond to the designated image data file within the management area of the storage medium 8.

If the result of the check made by the step S400 indicates that erasure is not permitted, a display device which is not shown is caused to display that erasure is not permitted and no erasing action is performed. In the event of an erasing instruction from an external computer, an erasure non-permission command is returned.

The above-stated display is made in any desired manner. For example, a non-erasure display is made by a liquid crystal display device within the viewfinder of a camera or by a warning sound of a sound generating member which is not shown. Further, in reading out data stored in the storage medium 8, the data can be read out irrespective of the state of the erasure permission/non-permission switch 21.

More specifically, when a switch or the like which is not shown is operated to instruct the system control part 11 to read image data, the system control part 11 finds the address of designated image data by reading the file name of the designated image data and information of the directory and the file allocation table (FAT) of the storage medium 8 obtained through the memory control part 7. The system control part 11 then transfers the desired image data to the buffer memory part 6 through the memory control part 7.

The above-stated reading action is performed also in a case where a reading instruction command is inputted through the I/F part 10 from an external computer or the like. After reading, the information read out is outputted to the external computer or the like through the memory control part 7 and the I/F part 10.

Further, in cases where the instruction of the erasure permission/non-permission switch 21 is arranged to be transmitted to the system control part 11 through the control part 22 as shown in Figs. 3(b), 3(d) and 3(f), the rotary recording medium 20 may be arranged to be controlled by interpreting the instruction of the erasure permission/non-permission switch 21 at the control part 22, in addition to the arrangement of having the system control part 11 carry out the above-stated process by transmitting the instruction of the erasure permission/non-permission switch 21 to the system control part 11 as it is.

While this embodiment has been described on the assumption that the system control part 11 and the memory control part 7 are arranged to be different blocks, the two may be arranged in a single chip to enable the system to be arranged simpler and in a smaller size.

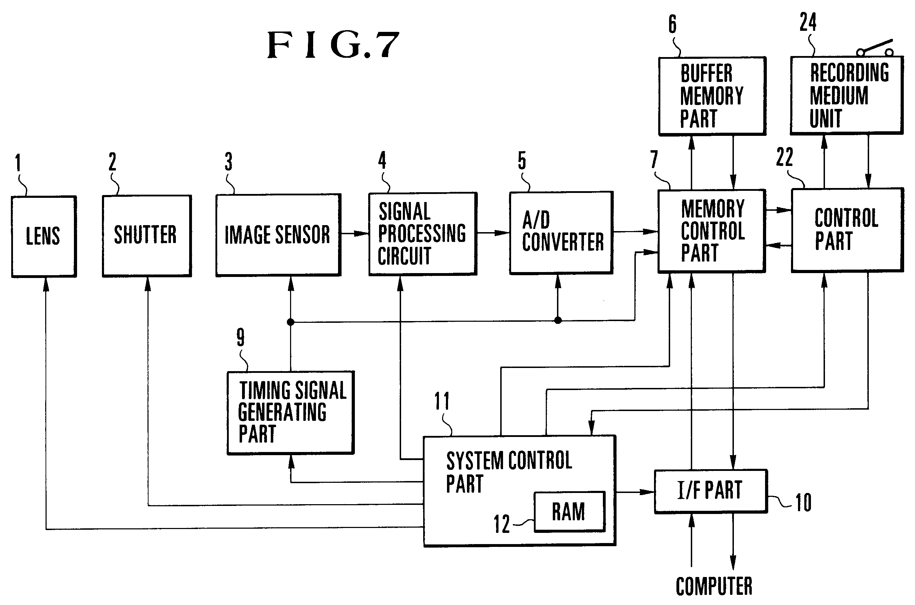

A second embodiment of this invention is next described with reference to Fig. 7. In Fig. 7, all the parts arranged to act in the same manner as those of the first embodiment are indicated by the same reference numerals and the details of them are omitted from the following description.

Referring to Fig. 7, a recording medium unit 24 which is detachably mountable includes a rotary recording medium 20 and the erasure permission/non-permission switch 21 as shown in Figs. 3(c) and 3(d). A control part 22 is provided with a head and rotary driving system for having access to the rotary recording medium 20. In the second embodiment, only the recording medium unit 24 is mountable and detachable directly on and from the camera. The system control part 11 of the embodiment is arranged to be capable of detecting the state of the erasure permission/non-permission switch 21 on the recording medium unit 24 through the control part 22.

In the arrangement, the method for recording on the recording medium unit 24 is similar to the method for recording on the storage medium 8 described in the foregoing. The details of the recording method is, therefore, omitted from description.

Further, the image pickup operation is also similar to that of the first embodiment described above, with the exception of that, in the second embodiment, the image data which is stored in the buffer memory part 6 is stored in the file area of the recording medium unit 24 through the memory control part 7 and the control part 22, at the step S306 in the flow chart of Fig. 5.

The erasing operation of the second embodiment is also similar to that of the first embodiment and, therefore, the details of it are omitted from description.

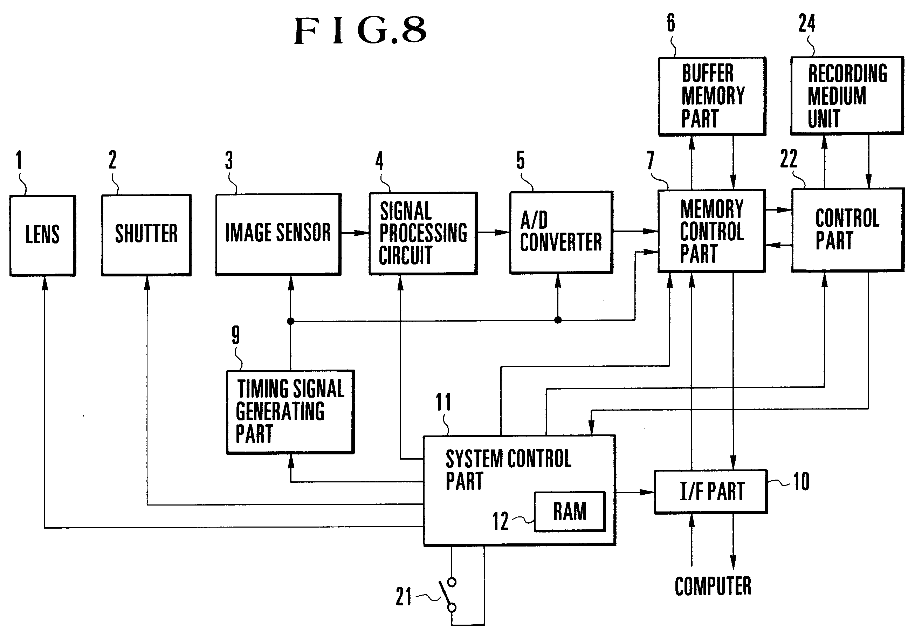

An information storage device which is arranged as a third embodiment of this invention is next described with reference to Fig. 8 which is a block diagram.

In each of the first and second embodiments, the erasure permission/non-permission switch 21 which is an instruction switch is disposed at the storage medium. In the case of the third embodiment, on the other hand, the erasure permission/non-permission switch 21 is disposed on the side of the system control part 11. In Fig. 8, all the parts that are similar to those of the embodiments described are indicated by the same reference numerals and the details of them are omitted from description.

Referring to Fig. 8, in the case of the third embodiment, only the recording medium unit 24 which is as shown in Fig. 3(e) or 3(f) is arranged to be detachably mounted directly on the camera. The switch 21 which is provided for setting the mode of permitting or not permitting an erasing action on the data recorded on the rotary recording medium 20 is connected to the system control part 11 to enable the system control part 11 to detect the state of the switch 21.

The third embodiment is arranged to perform a recording operation and an erasing operation in the same manner as the manner described in the foregoing. These operations of the third embodiments are, therefore, omitted from the following description.

Further, the camera of each of the second and third embodiments may be arranged to record information on the recording medium unit 24 and, in reading the information by means of a computer including the arrangement of the control part of the first embodiment, to use an adapter which is provided with the control part 22 and the I/F part 23 as shown in Figs. 3(c), 3(d), 3(e) or 3(f).

In the system which is arranged in the above-stated manner, the control part 22 is preferably arranged together with the memory control part 7 and the system control part 11 in a single chip which permits reduction in size and is advantageous in a case where the system is to be applied to a portable apparatus such as a camera. The I/F (interface) part 10 which is provided for an external storage medium is preferably, for example, a PCMCIA or the like if the system is to be applied to a general-purpose apparatus such as a computer.

Therefore, if the recording medium unit 24 is arranged to be used as a storage medium such as the one shown in Fig. 3(a) or 3(b) which has a common I/F part through an adapter having a control part and an I/F part as shown in Fig. 3(c), 3(d) and Fig. 3(e) or 3(f), the number of the kinds of ports does not have to be increased on the side of the computer.

Further, each of the first to third embodiments is arranged to carry out A/D conversion after the data obtained from the image sensor is processed. However, this arrangement may be changed to A/D convert the output of the image sensor into a digitized state before processing the output, although a process such as CDS (correlated double sampling) or the like may be carried out before the A/D conversion. Such a modification permits the signal processing part and the memory control part 7 to be arranged in a single chip.

Further, in the storage media 8 shown in Figs. 3(a) to 3(f) in the first to third embodiments, the rotary recording medium 20 and the control part 22 including a head and a rotary driving system may, of course, be replaced with a semiconductor memory and a control part including a memory control, respectively. Furthermore, the control part 22 and/or the I/F part 23 may be included in the recording medium unit 24 in addition to the rotary recording medium or semiconductor memory 20.

Each of the embodiments described is arranged to record new information in a storage area other than an area in which information has already been stored among the storage areas of the recording medium when no erasing action is permitted on information already stored on the recording medium. The invented arrangement permits effective use of the recording medium to its full capacity without destroying any information already in store as long as there is any room for recording new information.

It is another feature of this invention that each embodiment is arranged to discriminate any storage area where information is already stored from vacant areas by using information stored in a specific area within the recording medium and to record information on the basis of the result of the discrimination. Compared with the conventional method for preventing erroneous erasure by means of a single erasure inhibiting bit (flag), the possibility of losing necessary information by erroneous erasure can be much reduced in accordance with the arrangement of this invention.

An information storage device includes a storage circuit for storing information on a recording medium, an instruction circuit arranged to give an instruction as to permission or non-permission of erasure of information stored on the recording medium and a storage action control circuit arranged to control the storage circuit in such a way as to cause the storage circuit to store new information in a storage area other than a storage area in which information is already stored among storage areas provided on the recording medium when non-permission of erasure of information stored on the recording medium is instructed by the instruction circuit.

## Claims

1. An information storage device comprising:
storage means for storing information on a recording medium;
instruction means for instructing permission or non-permission of erasure of information stored on the recording medium; and
storage action control means for controlling and causing a storing action of said storage means to store new information in a storage area other than a storage area in which information is already stored among storage areas of the recording medium when non-permission of erasure of information stored on the recording medium is instructed by said instruction means.

2. A device according to claim 1, wherein a storage area in which information is already stored is discriminated from other storage areas of the recording medium by using information stored in a specific area on the recording medium.

3. A device according to claim 1 or 2, wherein said specific area on the recording medium is a management area provided separately from a file area provided for storing actual information, and said management area includes a reserved area for management of files, a file allocation table having entries which correspond respectively to access units of the file area, and a root directory in which file names, file sizes, and leading entry values and dates of files are stored.

4. An information storage medium comprising:
a) a storage part for storing data; and
b) an instruction part arranged to instruct inhibition of erasure of data stored in said storage part, data being able to be stored in an unrecorded area of said storage part even when inhibition of erasure of data stored is instructed by said instruction part.

5. A medium according to claim 4, wherein said storage part includes a first area provided for storing data and a second area provided for storing information about an area in which data is already stored.

6. A medium according to claim 5, wherein said second area is a management area and includes a reserved area for management of files, a file allocation table having entries which correspond respectively to access units of said first area, and a root directory in which file names, file sizes, and leading entry values and dates of files are stored.
